# EUROPEAN PATENT SPECIFICATION

(11) **EP 3 081 878 B1**
(45) Date of publication and mention of the grant of the patent: **03.02.2021**
(21) Application number: 14870442.2
(22) Date of filing: 05.12.2014
(51) Int. Cl.: F24H 1/18, F24D 17/00, F24D 19/10

(54) **HOT-WATER SUPPLY DEVICE**
HEISSWASSERVERSORGUNGSVORRICHTUNG
DISPOSITIF D'ALIMENTATION EN EAU CHAUDE

(30) Priority: 09.12.2013 JP 2013253856
(43) Date of publication of application: 19.10.2016
(73) Proprietor: Panasonic Intellectual Property Management Co., Ltd., Osaka-shi, Osaka 540-6207 (JP)
(72) Inventor: YAMAMOTO, Teruo, Osaka 540-6207 (JP); SHIGETA, Akihiro, Osaka 540-6207 (JP); AOYAMA, Shigeo, Osaka 540-6207 (JP); MORIWAKI, Shunji, Osaka 540-6207 (JP); NISHIYAMA, Yoshitsugu, Osaka 540-6207 (JP)
(74) Representative: Eisenführ Speiser
(86) International application number: PCT/JP2014/006082
(87) International publication number: WO 2015/087523

(56) References cited:
- JP-A- 2002 122 352
- JP-A- 2002 122 352
- JP-A- 2005 221 204
- JP-A- 2005 221 204
- JP-A- 2007 085 582
- JP-A- 2010 156 484
- JP-A- 2010 156 484
- JP-B2- 4 557 852

## Description

### [TECHNICAL FIELD]

The present invention relates to a hot-water supply device which heats secondary fluid while utilizing heat of primary fluid, and which uses the secondary fluid for a hot water supply operation.

### [BACKGROUND TECHNIQUE]

There is a conventional hot-water supply device of this kind which includes a heat exchanger for exchanging heat between a primary fluid flowing through a primary flowing path and secondary fluid flowing through a secondary flowing path, and a sensor which measures temperatures and flow rates of the fluids at outlet and inlet ports of the heat exchanger. This hot-water supply device controls a circulation pump which sends primary fluid such that temperature of the secondary fluid flowing through the secondary flowing path, i.e., hot water supply temperature becomes equal to hot water supply setting temperature based on values of the measured temperatures and flow rates. In this hot-water supply device, especially when a hot water supply operation is started, i.e., when a flow rate of secondary fluid is changed, a required heat amount is calculated from detection values of the temperatures and the flow rates of the fluids at the outlet and inlet ports of the heat exchanger and from the hot water supply setting temperature, and the number of rotations of the circulation pump is determined in accordance with the calculated required heat amount (see patent document 1 for example). A further conventional hot-water supply device according to the preamble is also known from JP 2002122352.

Fig. 7 shows the conventional hot-water supply device described in patent document 1. As shown in Fig. 7, this hot-water supply device includes a hot water tank 100 in which hot water is stored, and a fluid heating flowing path 110. Heating means 120 for heating hot water is placed in the fluid heating flowing path 110. Water in a lower portion of the hot water tank 100 is sent to an upper portion of the hot water tank 100 through the heating means 120, thereby producing hot water.

This hot-water supply device includes a primary flowing path 130a in which hot water flows from the upper portion of the hot water tank 100 toward the lower portion of the hot water tank 100 and in which a hot water supply heat exchanger 130 is placed at a halfway portion of the primary flowing path 130a, and a secondary flowing path 130b in which hot water flows from a water supply source toward a hot water supply terminal (not shown), and a secondary flowing path 130b in which the hot water supply heat exchanger 130 is placed at a halfway portion of the secondary flowing path 130b. In the hot water supply heat exchanger 130, hot water flowing through the primary flowing path 130a and hot-water supply device flowing through the secondary flowing path 130b exchange heat with each other, and heats hot water flowing through the secondary flowing path 130b.

The primary flowing path 130a is provided with a primary flowing path inlet temperature detecting means 160 which detects temperature of hot water flowing into the hot water supply heat exchanger 130, and a circulation pump 140 which circulates hot water in the hot water tank 100 through the primary flowing path 130a. The secondary flowing path 130b is provided with water supply hot water flow rate detecting means 150 which detects a flow rate of hot water flowing through the secondary flowing path 130b, secondary flowing path inlet temperature detecting means 161 which detects temperature of hot water flowing into the hot water supply heat exchanger 130, and secondary flowing path outlet temperature detecting means 162 which detects temperature of hot water flowing out from the hot water supply heat exchanger 130.

A controller 170 calculates a required heat amount based on detection values of the hot water supply flow rate detecting means 150 and the temperature detecting means 160 to secondary flowing path outlet temperature detecting means 162, and controls the number of rotations of the circulation pump 140 in accordance with the required heat amount.

### [PRIOR ART DOCUMENT]

### [PATENT DOCUMENT]

[PATENT DOCUMENT 1] Japanese Patent Publication No.4557852

### [SUMMARY OF THE INVENTION]

### [PROBLEM TO BE SOLVED BY THE INVENTION]

According to the conventional configuration, however, the number of rotations of the circulation pump is determined based on the required heat amount when the operation of the hog water supply operation is started, and a heat amount remaining in a first flowing portion, especially in the hot water supply heat exchanger is not taken into consideration. Therefore, when a heat amount remaining in the first flowing portion is large, hot water supply temperature when the heat exchanger hot water supply operation is started becomes instable. Further, a heat amount remaining in the first flowing portion is small, there is a problem that time is required until hot water supply temperature reaches hot water supply setting temperature.

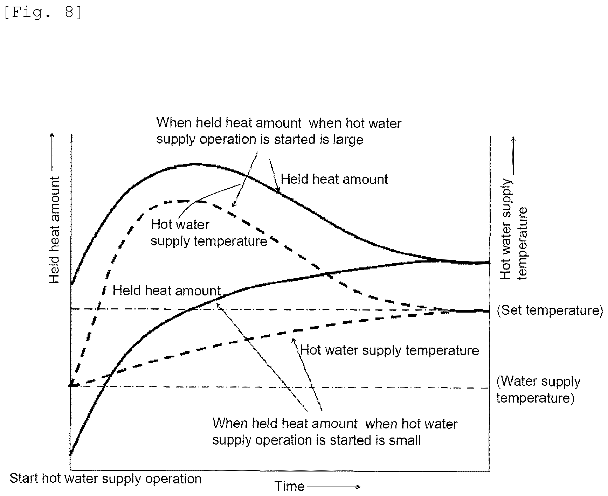

That is, as shown in Fig. 8, when time elapsed until the next hot water supply operation is started after the last hot water supply operation is completed is relatively short, and when a required heat amount of the hot water supply heat exchanger when the hot water supply operation is started is large, if the number of rotations of the are controlled based on the required heat amount, the hot water supply temperature overshoots, and hot water having temperature higher than set temperature is supplied to the hot water supply terminal in some cases.

As shown in Fig. 8 on the other hand, when relatively long time is elapsed after the last time hot water supply operation and the hot water supply operation is started in a state where the held heat amount of the heat exchanger is small, heat held by the primary fluid is not only absorbed by the secondary fluid but also absorbed by a hot water supply heat exchanger. Therefore, time is required until the secondary fluid is heated, and the rising of the hot water supply temperature delays.

In this manner, by temperature of hot water remaining in the first flowing portion, there are problems that temperature of hot water (hot water supply temperature) supplied to the hot water supply terminal becomes instable, and time is required until temperature reaches the hot water supply setting temperature.

The present invention has been accomplished to solve the conventional problem, and it is an object of the present invention to provide a hot-water supply device having excellent responsiveness and capable of making hot water supply terminal swiftly reach set temperature especially also when a hot water supply operation is started.

### [MEANS FOR SOLVING THE PROBLEM]

To solve the above problems, a hot-water supply device according to the present invention includes a first flowing portion through which first heat medium flows; a second flowing path through which second heat medium flows from a water supply source toward hot water supply terminal; a heat exchanger in which the first heat medium flowing through the first flowing path and the second heat medium flowing through the second flowing path exchange heat from each other; fluid transfer means through which is provided in the first flowing path and through which the first heat medium flows into the first flowing path; flow rate detecting means provided in the second flowing path; hot water supply temperature detecting means provided in the second flowing path for detecting hot water supply terminal of the second heat medium flowing from the heat exchanger toward the hot water supply terminal, and control means for controlling the fluid transfer means such that the hot water supply terminal becomes equal to set temperature do carry out the hot water supply operation, wherein when the flow rate detecting means detects that a flow rate of the second heat medium is equal to a predetermined flow rate or more, the control means actuates the fluid transfer means to start the hot water supply operation, the control means estimate a held heat amount of the heat exchanger when the flow rate detecting means detects that the flow rate is equal to the predetermined flow rate or more, and the control means controls the fluid transfer means such that the relatively larger the held heat amount is, the smaller a transfer flow rate of the first heat medium when the hot water supply temperature is brought closer to the set temperature becomes wherein when the flow rate detecting means detects the flow rate less than the predetermined flow rate, the control means stops the fluid transfer means to complete the hot water supply operation, the control means includes timer means which measures time elapsed from an instant when a last hot water supply operation is completed to an instant when a next hot water supply operation is started, and the control means estimates the held heat amount by the elapsed time when the flow rate detecting means detects a flow rate not less than the predetermined flow rate and the hot water supply operation is restarted, and when the elapsed time is relatively short, the control means determines that the held heat amount is relatively large.

According to this, when the held heat amount of the heat exchanger is relatively small at the time of start of the hot water supply operation, a transfer flow rate of the first heat medium is made large and a heat amount given to the heat exchanger is secured, thereby also raising temperature of the heat exchanger itself. As a result, the hot water supply terminal raises quickly. When the held heat amount of the heat exchanger is relatively large at the time of the start of the hot water supply operation, the transfer flow rate of the first heat medium is made small so that excessive heat is not transmitted to the second heat medium. As a result, it is possible to restrain hot water supply terminal from overshoots with respect to set temperature, and to prevent the hot water supply terminal from becoming instable.

### [EFFECTS OF INVENTION]

According to the present invention, it is possible to provide a hot-water supply device having excellent responsiveness and capable of making hot water supply terminal swiftly reach set temperature also when a hot water supply operation is started.

### [BRIEF DESCRIPTION OF THE DRAWINGS]

Fig. 1 is a block diagram of a hot-water supply device according to a first embodiment of the present invention;
Fig. 2 is a flowchart of control in a hot water supply operation of the hot-water supply device;
Fig. 3 is a graph showing a transition of heat amount and temperature in the hot water supply operation of the hot-water supply device.
Fig. 4 is a block diagram of a hot-water supply device according to a second embodiment of the present invention;
Fig. 5 is a flowchart of control of a hot water supply operation of the hot-water supply device;
Fig. 6 is a block diagram of a hot-water supply device according to a third embodiment of the present invention;

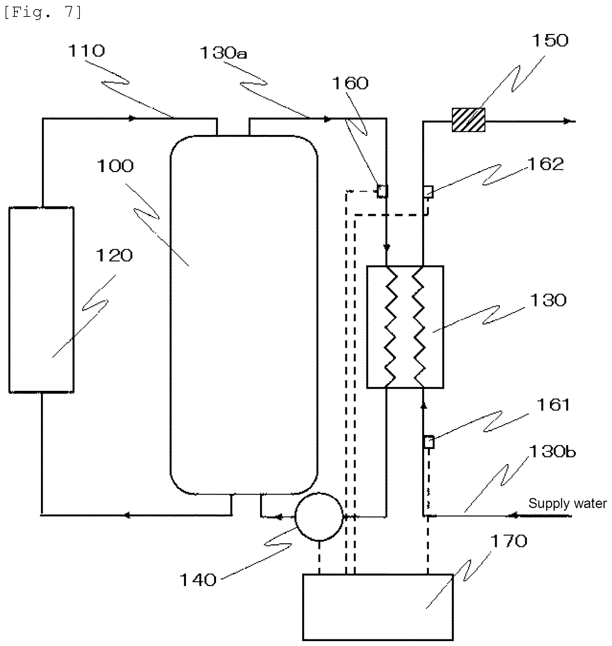

Fig. 7 is a block diagram of a conventional hot-water supply device; and
Fig. 8 is a graph showing a transition of a heat amount and temperature in a hot water supply operation of the hot-water supply device.

A first aspect of the invention provided a hot-water supply device including a first flowing portion through which first heat medium flows; a second flowing path through which second heat medium flows from a water supply source toward hot water supply terminal; a heat exchanger in which heat of the first heat medium flowing through the first flowing path and heat of the second heat medium flowing through the second flowing path are exchanged heat from each other; fluid transfer means provided in the first flowing path to flow the first heat medium through the first flowing path; flow rate detecting means provided in the second flowing path; hot water supply temperature detecting means provided in the second flowing path for detecting hot water supply terminal of the second heat medium flowing from the heat exchanger toward the hot water supply terminal, and control means for controlling the fluid transfer means such that the hot water supply temperature becomes equal to set temperature do carry out the hot water supply operation, wherein when the flow rate detecting means detects that a flow rate of the second heat medium is equal to a predetermined flow rate or more, the control means actuates the fluid transfer means to start the hot water supply operation, the control means estimate a held heat amount of the heat exchanger when the flow rate detecting means detects that the flow rate is equal to the predetermined flow rate or more, and the control means controls the fluid transfer means such that the relatively larger the held heat amount is, the smaller a transfer flow rate of the first heat medium when the hot water supply temperature is brought closer to the set temperature becomes wherein when the flow rate detecting means detects a flow rate less than the predetermined flow rate, the control means stops the fluid transfer means to complete the hot water supply operation, the control means includes timer means which measures time elapsed from an instant when a last hot water supply operation is completed to an instant when a next hot water supply operation is started, and the control means estimates the held heat amount by the elapsed time when the flow rate detecting means detects a flow rate not less than the predetermined flow rate and the hot water supply operation is restarted, and when the elapsed time is relatively short, the control means determines that the held heat amount is relatively large.

According to this, when a held heat amount of the heat exchanger is relatively small at the time of start of the hot water supply operation, a transfer flow rate of the first heat medium is made large and a heat amount given to the heat exchanger is secured, thereby also raising temperature of the heat exchanger itself. Hence, the hot water supply terminal raises quickly. When the held heat amount of the heat exchanger is relatively large at the time of the start of the hot water supply operation, the transfer flow rate of the first heat medium is made small so that excessive heat amount is not transmitted to the second heat medium. Hence, the hot water supply temperature is restrained from overshooting with respect to the set temperature, and it is also possible to restrain the hot water supply temperature from undershooting with respect to the set temperature by its reaction. As a result, also at the time of the start of the hot water supply operation, it is possible provide a hot water having excellent responsivity and capable of swiftly making the hot water supply temperature reach the set temperature

(Deleted)

Furthermore, the held heat amount of the heat exchanger can be estimated by elapsed time after the last time hot water supply operation is completed to the hot water supply operation is started. The held heat amount of the heat exchanger is gradually lost after the hot water supply operation is stopped. Hence, if thermal characteristics of the heat exchanger is previously measured, the held heat amount of the heat exchanger can be estimated from the elapsed time. When the elapsed time is relatively long, the transfer flow rate of the first heat medium is increased. When the elapsed time is made relatively short, the transfer flow rate of the first heat medium is made small. As a result by using the elapsed time after the last time hot water supply operation is completed, the hot-water supply device having excellent responsiveness can be realized with a simple configuration.

(Deleted)

(Deleted)

(Deleted)

(Deleted)

Elapsed time and detection time of the heat exchanger temperature detecting means and the hot water supply temperature detecting means can respectively be combined together, and this can be used for estimating the held heat amount of the heat exchanger. According to this, also especially when the hot water supply operation is started, it is possible to more precisely estimate the held heat amount of the heat exchanger, and to provide a hot-water supply device having excrescent responsiveness.

Next, embodiments of the present invention will be described with reference to the drawings. The invention is not limited to the embodiments.

### (First Embodiment)

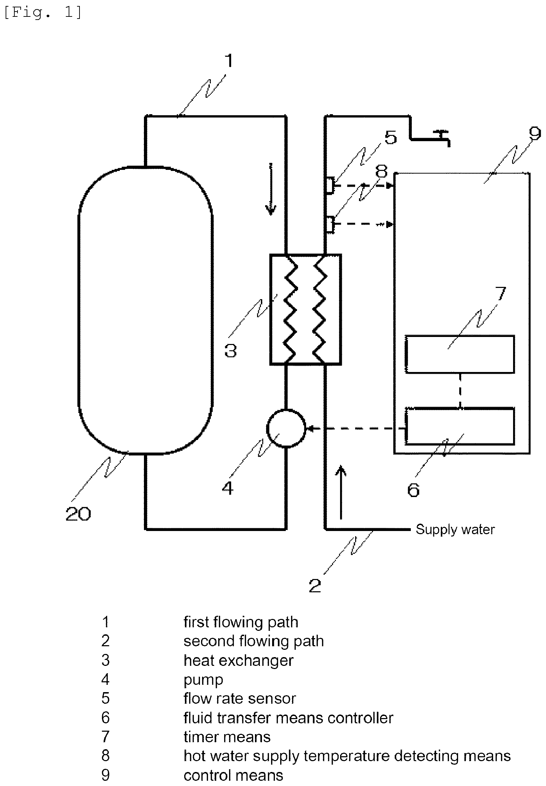

Fig. 1 is a block diagram of a hot-water supply device according to a first embodiment of the present invention.

As shown in Fig. 1, this hot-water supply device includes a hot water tank 20 in which first heat medium is stored, and a circulation circuit (first flowing path) 1 in which first heat medium flowing out from an upper portion of the hot water tank 20 flows toward a lower portion of the hot water tank 20. A heat exchanger 3 is provided in a halfway portion of the circulation circuit 1. Water or antifreeze liquid is used as the first heat medium. The hot-water supply device includes heating means (not shown) for heating first heat medium stored in the hot water tank 20. It is possible to use a heat pump device, a combustion machine and an electric heater as the heating means for example. According to this, high temperature first heat medium is stored in the hot water tank 20.

The circulation circuit 1 may be directly connected to the heating means. That is, the heating means for heating the first heat medium may be provided instead of the hot water tank 20 shown in Fig. 1. As described above, the circulation circuit 1 is directly or indirectly connected to the heating means which heats the first heat medium.

The hot-water supply device includes a hot water supply flowing path (second flowing path) 2. One end of the second flowing path 2 is connected to the water supply source such as a water pipe, and the other end of the second flowing path 2 is connected to a hot water supply terminal such as a kraan or a shower. According to this, water as second heat medium flows into the hot water supply flowing path 2. The heat exchanger 3 is provided at a halfway portion of the hot water supply flowing path 2.

The heat exchanger 3 exchanges heat between the first heat medium and the second heat medium (water). Hence, by circulating the high temperature first heat medium through the circulation circuit 1, it is possible to heat the second heat medium to produce hot water. The produced hot water flows through the hot water supply flowing path 2 and is supplied from the hot water supply terminal. The hot water supply is carried out in this manner.

The circulation circuit 1 is provided with a pump (fluid transfer means) 4 for flowing the first heat medium into the circulation circuit 1. It is preferable that the pump 4 is provided downstream of the heat exchanger 3 with respect to a circulation direction of the first heat medium. According to this, the first heat medium which carried out the heat exchange in the heat exchanger 3 and whose temperature was lowered flows into the pump 4. According to this, it is possible to prevent the pump 4 from being deteriorated by heat held by the first heat medium. In this embodiment, as shown in Fig. 1, the circulation circuit 1 is formed by annularly connecting the hot water tank 20, the heat exchanger 3, the pump 4 and the lower portion of the hot water tank 20 to one another through heat medium pipes.

The hot water supply flowing path 2 is provided with a flow rate sensor (flow rate detecting means) 5 for detecting whether second heat medium flows into the hot water supply flowing path 2, and hot water supply temperature detecting means 8 for detecting temperature of second heat medium flowing out from the heat exchanger 3 and flowing toward the hot water supply temperature. As the flow rate sensor 5, it is also possible to use a flow switch for detecting whether second heat medium flows through the hot water supply flowing path 2 by detecting whether the second heat medium flows at a predetermined flow rate or more.

The control means 9 controls the hot water supply temperature which is supplied to the hot water supply terminal. The control means 9 has a function to receive detection values of the flow rate sensor 5 and the hot water supply temperature detecting means 8, and also includes a fluid transfer means controller 6 for controlling the number of rotations of the pump 4. The fluid transfer means controller 6 controls the number of rotations of the pump 4 based on detection values received from the flow rate sensor 5 and the hot water supply temperature detecting means 8. That is, based on the received detection values, the number of rotations of the pump 4 is controlled such that a detection value of the hot water supply temperature detecting means 8 becomes equal to set temperature, and a transfer flow rate of the first heat medium in the circulation circuit 1 is changed. The set temperature can be set by a user by a remote controller (not shown).

The control means 9 is provided with a timer (timer means) 7 for measuring the current time and time elapsed from reference time. In this embodiment, time point at which the last hot water supply operation is completed is defined as reference time, and the timer 7 measures time elapsed after the reference time. The control means 9 in this embodiment estimates the held heat amount of the heat exchanger 3 using the elapsed time when the hot water supply operation is started. Based on the estimated held heat amount, the control means 9 changes the number of rotations of the pump 4, i.e., the transfer flow rate of the first heat medium in the circulation circuit 1.

Operation and function of the hot-water supply device configured as described above will be described.

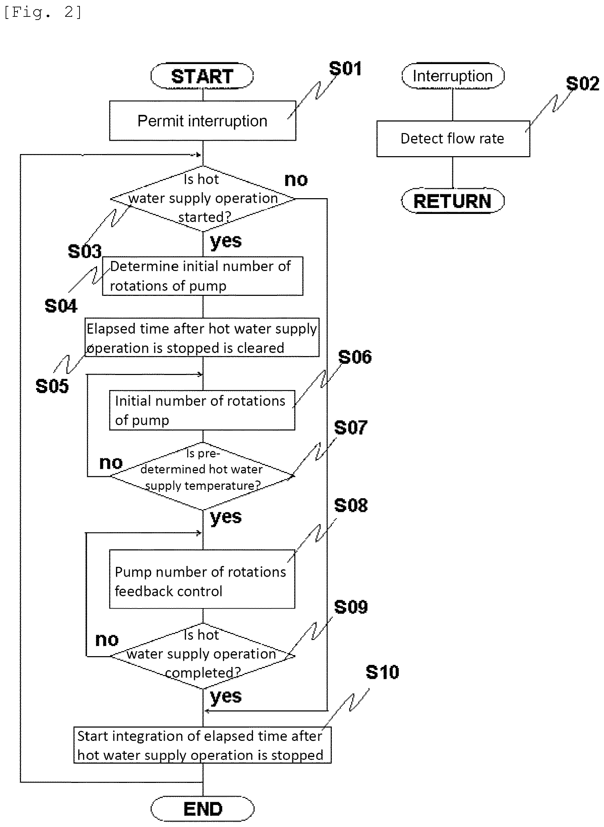

Fig. 2 is a flowchart of control when the hot-water supply device of the embodiment carries out the hot water supply operation.

First, if the hot-water supply device is actuated, interruption for flow rate detection processing to determine, by the flow rate sensor 5, whether second heat medium flows is permitted (step 01). In the state where the interruption is permitted, if the hot water supply terminal is opened and the second heat medium flows, the flow rate sensor 5 detects a predetermined flow rate (determination flow rate) or more (step 02). If the flow rate sensor 5 detects a predetermined flow rate or more, the control means 9 determines that the hot water supply operation should be started (step 03), the control means 9 determines the initial number of rotations of the pump 4, i.e., an initial transfer flow rate of the first heat medium (step 04). The hot-water supply device is actuated, and when the hot water supply operation of after second or more times is started, time elapsed after the last time hot water supply operation is completed is cleared (step 05).

The initial number of rotations is stored in the control means 9 as a table prepared based on a preliminary experiment for example. Here, the initial number of rotations is set low when the elapsed time from the completion of the last time hot water supply operation to the start of the next hot water supply operation is relatively short, and is set high when this elapsed time is relatively long.

If the hot water supply operation is completed, the held heat amount which is held by the heat exchanger 3 gradually becomes small due to heat radiation. As the elapsed time from the completion of the last hot water supply operation to the start of the next hot water supply operation is relatively longer, the held heat amount of the heat exchanger 3 is small when the next hot water supply operation is started. In this manner, there is a correlation between the held heat amount of the heat exchanger 3 and the elapsed time from the completion of the hot water supply operation to the start of the next hot water supply operation. Therefore, thermal characteristics of the heat exchanger 3 to be used are previously measured, and a table of the initial number of rotations of the pump 4 is prepared based on the measured value utilizing its thermal time constant. According to this, as the elapsed time from the completion of the last hot water supply operation to the start of the next hot water supply operation is relatively longer, it is possible to estimate that the held heat amount of the heat exchanger 3 is small, and when the hot water supply operation is started, it is possible to precisely estimate the held heat amount of the heat exchanger 3.

If the hot water supply operation is started in a state where the held heat amount of the heat exchanger 3 is small, heat possessed by the first heat medium is absorbed not only by the second heat medium but also by the heat exchanger 3, and a raise in the hot water supply temperature becomes slow. Hence, when the elapsed time from the completion of the last time hot water supply operation to the start of the next hot water supply operation is relatively long, the control means 9 determines that the held heat amount of the heat exchanger 3 is small, the control means 9 controls such that the initial number of rotations of the pump 4 becomes high, and the transfer flow rate of the first heat medium is increased. According to this, a heat amount to be given to the heat exchanger 3 is secured, and a quick raise in the hot water supply temperature is realized.

When the elapsed time from the completion of the last time hot water supply operation to the start of the next hot water supply operation is relatively short on the other hand, the control means 9 determines that the held heat amount of the heat exchanger 3 is large, the control means 9 controls such that the initial number of rotations of the pump 4 is reduced, and the transfer flow rate of the first heat medium is reduced. According to this, an excessive heat amount is not transmitted to the second heat medium. Hence, it is possible to restrain the hot water supply temperature from overshooting the set temperature, and to restrain the hot water supply temperature from overshooting by its reaction.

It is also possible to employ such a configuration that in the first hot water supply operation after the hot-water supply device is actuated, elapsed time from the actuation of the hot-water supply device to the first hot water supply operation is measured, this elapsed time and the table are compared with each other, and the initial number of rotations is determined. If the power supply of the hot-water supply device is turned OFF or the thermo-OFF state is established, the elapsed time is reset. Here, if the elapsed time from the completion of the hot water supply operation to the re-start of the hot-water supply device is relatively short, the heat exchanger 3 has many held heat amounts. Therefore, when the hot-water supply device is actuated, time from the actuation of the hot-water supply device to the first hot water supply operation is measured, and this elapsed time and the table are compared with each other to determine the initial number of rotations. According to this, also in the first hot water supply operation after the hot-water supply device is actuated, the control means 9 estimates the held heat amount of the heat exchanger 3 and determines the initial number of rotations of the pump 4. In the first hot water supply operation after the hot-water supply device is actuated, a predetermined value may be determined as the initial number of rotations irrespective of elapsed time after the hot-water supply device is actuated.

The initial number of rotations (initial transfer flow rate) may be varied when the hot water supply temperature raises.

Next, the pump 4 is operated at the initial number of rotations (step 06) . According to this, the second heat medium is heated by the first heat medium in the heat exchanger 3, and the hot water supply temperature is brought close to the set temperature. If the pump 4 is operated at the initial number of rotations, the control means 9 determines whether the hot water supply temperature detected by the hot water supply temperature detecting means 8 reaches the predetermined hot water supply temperature (step 07). The predetermined hot water supply temperature is set equal to the set temperature, or set to temperature which is lower than the set temperature by predetermined temperature.

If the hot water supply temperature becomes equal to the predetermined hot water supply temperature or more, the control means 9 controls the number of rotations of the pump 4, i.e., the transfer flow rate of the first heat medium by the feedback control based on a detection value of the hot water supply temperature detecting means 8 such that the hot water supply temperature becomes equal to the set temperature. PID control is used as the feedback control for example. By the feedback control, the hot water supply temperature is kept at the set temperature.

If the hot water supply terminal is closed and the flow rate sensor 5 detects a flow rate less than predetermined flow rate (determination flow rate), the control means 9 determines that the hot water supply operation should be completed (step 02, step 09), and the pump 4 is stopped. The control means 9 starts integrating the time from completion of the hot water supply operation (step 10).

If the hot water supply terminal is again opened and the flow rate sensor 5 detects the predetermined flow rate (determination flow rate) or more (step 02, step 03), the hot water supply operation is restarted. By repeating the above operations, the hot water supply operation is carried out.

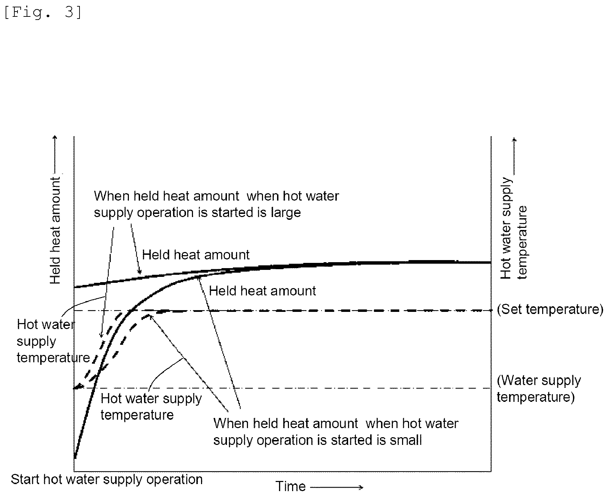

Fig. 3 is a graph showing a transition of the hot water supply temperature and the held heat amount of the heat exchanger when the hot water supply operation is started. Especially, a case where the held heat amount of the heat exchanger 3 is relatively large and a case where the held heat amount is relatively small are shown. It can be found that the initial number of rotations of the pump 4 is changed in accordance with the held heat amount of the heat exchanger 3 when the hot water supply operation is started and as a result, the hot water supply temperature raises toward the set temperature quickly as compared with the conventional hot-water supply device (see Fig. 8), and a hot-water supply device having excellent responsiveness having no overshoot is realized.

As described above, according to the hot-water supply device of the embodiment, when the held heat amount of the heat exchanger 3 at the time of start of the hot water supply operation is relatively large, the initial number of rotations of the pump 4 lowered, i.e., the transfer flow rate of the first heat medium is reduced. According to this, it is possible to enhance the responsiveness when the hot water supply operation is started. The hot-water supply device of the embodiment estimates the held heat amount of the heat exchanger 3 by the elapsed time from the completion of the last time hot water supply operation to the start of the next hot water supply operation when the hot water supply operation is started.

That is, when the elapsed time is relatively long, it is estimated that the held heat amount of the heat exchanger 3 is small, and the initial number of rotations of the pump 4 is increased, thereby raising of the hot water supply temperature faster. When the elapsed time is relatively short on the other hand, it is estimated that the held heat amount of the heat exchanger 3 is large, the initial number of rotations of the pump 4 is reduced, and overshoot of the hot water supply temperature is restrained. If the hot water supply temperature reaches the predetermined hot water supply temperature, control is shifted to feedback control based on detected temperature of the hot water supply temperature detecting means 8. According to this, it is possible to provide a hot-water supply device having excellent responsiveness.

In this embodiment, water or antifreeze liquid is used as the first heat medium which flows through the circulation circuit 1, but HFC refrigerant can also be used as the first heat medium. In this case, the heat exchanger 3 has a function as a refrigerant radiator, and the circulation circuit 1 becomes a heat pump cycle in which a compressor, the heat exchanger 3, a decompressor and an evaporator are annularly connected to one another in this order through refrigerant pipes.

When a heat source such as geothermal heat can be utilized, the circulation circuit 1 may employ a configuration that the first heat medium can pass through the heat exchanger 3 only once. Further, when a height difference between the heat source and the heat exchanger 3 can be utilized, a flow rate adjusting valve is provided instead of the pump 4, and the transfer flow rate of the first heat medium may be changed by controlling an opening degree of the flow rate adjusting valve.

When detected temperature of the hot water supply temperature detecting means 8 at the time of start of the hot water supply operation is equal to predetermined hot water supply temperature or more, the control means 9 may control the number of rotations of the pump 4 by the feedback control based on the detected temperature of the hot water supply temperature detecting means 8 from the start of the hot water supply operation.

### (Second Embodiment)

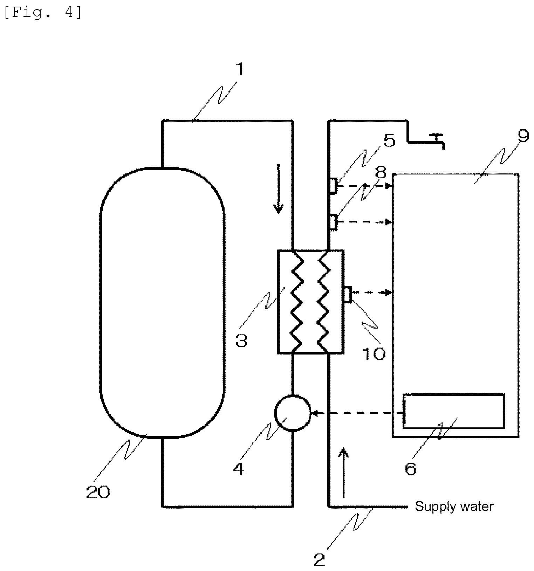

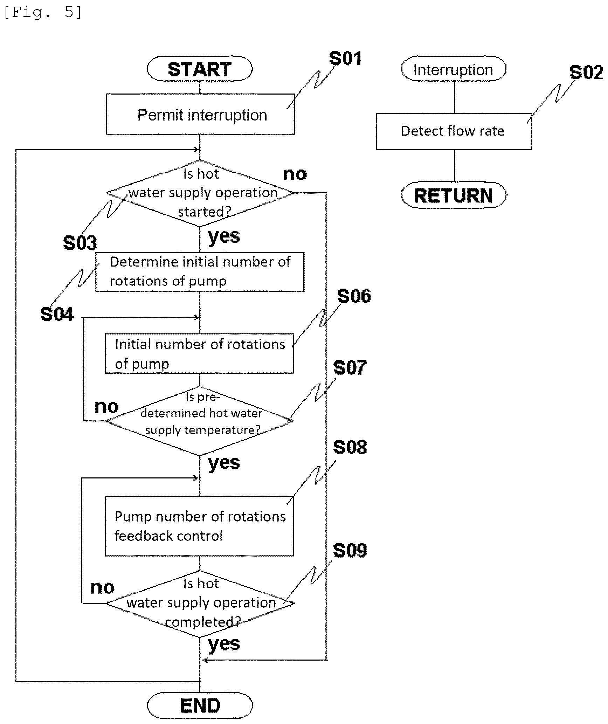

Fig. 4 is a block diagram of a hot-water supply device according to a second embodiment of the present invention. Fig. 5 is a flowchart of control when the hot-water supply device of the second embodiment carries out a hot water supply operation. In the second embodiment, the same symbols are allocated to the same elements as those of the first embodiment, and detailed description thereof will be omitted.

The second embodiment is different from the first embodiment in that heat exchanger temperature detecting means 10 which detects temperature of the heat exchanger 3 is provided. The heat exchanger temperature detecting means 10 is provided on a surface of the heat exchanger 3. According to this, the heat exchanger temperature detecting means 10 can directly detect temperature of the heat exchanger 3.

In the second embodiment, the initial number of rotations is stored in the control means 9 as a table which is prepared based on a preliminary experiment. Here, the initial number of rotations is set low when temperature of the heat exchanger 3 when the hot water supply operation is started is relatively high, and the initial number of rotations is set high when the temperature of the heat exchanger 3 is relatively low.

A held heat amount possessed by the heat exchanger 3 can be estimated by directly detecting temperature of the heat exchanger 3. Hence, the held heat amount of the heat exchanger 3 is estimated by the detected temperature of the heat exchanger temperature detecting means 10, and if the detected temperature of the heat exchanger temperature detecting means 10 is relatively high, the initial number of rotations of the pump 4 is reduced. When the detected temperature of the heat exchanger temperature detecting means 10 is relatively low, the initial number of rotations of the pump 4 is increased. According to this, also when the hot water supply operation is started, it is possible to realize a hot-water supply device having excellent responsiveness and capable of swiftly making the hot water supply temperature reach the set temperature.

### (Third Embodiment)

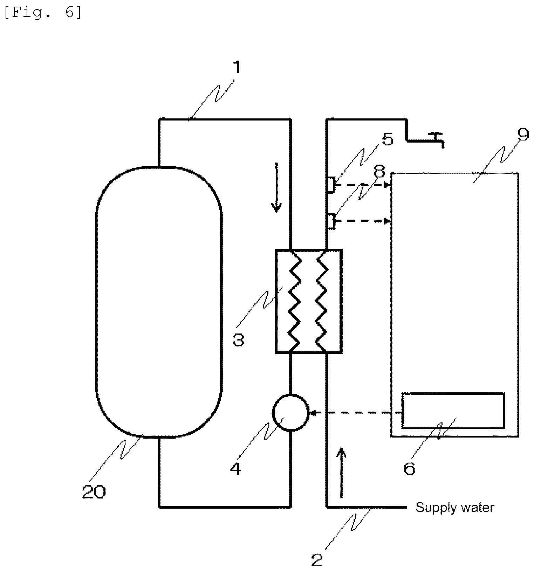

Fig. 6 is a block diagram of a hot-water supply device according to a third embodiment of the present invention. In the third embodiment, the same symbols are allocated to the same elements as those of the first and second embodiments, and detailed description thereof will be omitted.

The third embodiment is different from the first and second embodiments in that the initial number of rotations of the pump 4 is changed based on detected temperature of the hot water supply temperature detecting means 8 when the hot water supply operation is started.

In the third embodiment, the initial number of rotations is stored in the control means 9 as a table which is prepared based on a preliminary experiment. Here, the initial number of rotations is set low when the detected temperature of the hot water supply temperature detecting means 8 when the hot water supply operation is started is relatively high, and when the detected temperature of the hot water supply temperature detecting means 8 is relatively low, the initial number of rotations is set high.

After the hot water supply operation is completed, second heat medium which stays in the hot water supply flowing path 2 releases heat to peripheries of the hot water supply flowing path 2, and temperature is lowered like the heat exchanger 3. Therefore, it is possible to estimate the held heat amount of the heat exchanger by the detected temperature of the hot water supply temperature detecting means 8 when the hot water supply operation is started.

Hence, the held heat amount of the heat exchanger 3 is estimated by the detected temperature of the hot water supply temperature detecting means 8 when the hot water supply operation is started, and when the detected temperature of the hot water supply temperature detecting means 8 is relatively high, the initial number of rotations of the pump 4 is reduced. When the detected temperature of the hot water supply temperature detecting means 8 is relatively low, the initial number of rotations of the pump 4 is increased. According to this, also when the hot water supply operation is started, it is possible to realize a hot-water supply device having excellent responsiveness and capable of swiftly making the hot water supply temperature reach the set temperature.

### [INDUSTRIAL APPLICABILITY]

As described above, according to the hot-water supply device of the present invention, it is possible to swiftly make hot water flowing through the hot water supply flowing path reach set temperature by estimating a held heat amount of a heat exchanger. Therefore, the present invention can be applied to various kinds of hot-water supply devices without limiting kinds of the first heat medium which heats hot water and kinds of the heat source of the first heat medium.

### [EXPLANATION OF SYMBOLS]

- 1: first flowing path (circulation circuit)
- 2: second flowing path (hot water supply flowing path)
- 3: heat exchanger
- 4: pump (fluid transfer means)
- 5: flow rate sensor (flow rate detecting means)
- 6: fluid transfer means controller
- 7: timer (timer means)
- 8: hot water supply temperature detecting means
- 9: control means
- 10: heat exchanger temperature detecting means

## Claims

1. A hot-water supply device comprising:
a first flowing path (1) through which a first heat medium flows;
a second flowing path (2) through which a second heat medium flows from a water supply source toward a hot water supply terminal;
a heat exchanger (3) in which heat of the first heat medium flowing through the first flowing path (1) and heat of the second heat medium flowing through the second flowing path (2) are exchanged with each other;
fluid transfer means (4) provided in the first flowing path (1) to flow the first heat medium through the first flowing path (1);
flow rate detecting means (5) provided in the second flowing path (2);
hot water supply temperature detecting means (8) provided in the second flowing path (2) between the heat exchanger (3) and the hot water supply terminal; and
control means (9) which is configured for controlling the fluid transfer means (4) to carry out a hot water supply operation such that hot water supply temperature detected by the hot water supply temperature detecting means (8) becomes equal to set temperature, wherein the device is configured such that
when the flow rate detecting means (5) detects that a flow rate of the second heat medium is equal to a predetermined flow rate or more, the control means (9) actuates the fluid transfer means (4) and starts the hot water supply operation, and
the control means (9) estimates a held heat amount of the heat exchanger (3) when the flow rate detecting means (5) detects that the flow rate is equal to the predetermined flow rate or more, and the control means controls the fluid transfer means (4) such that the relatively larger the held heat amount is, the smaller a transfer flow rate of the first heat medium when the hot water supply temperature is brought close to the set temperature becomes, **characterized in that** the device if configured such that
when the flow rate detecting means (5) detects the flow rate less than the predetermined flow rate, the control means (9) stops the fluid transfer means (4) to complete the hot water supply operation,
the control means (9) includes timer means (7) which measures time elapsed from an instant when a last hot water supply operation is completed to an instant when a next hot water supply operation is started, and
the control means (9) estimates the held heat amount by the elapsed time when the flow rate detecting means (5) detects a flow rate not less than the predetermined flow rate and the hot water supply operation is restarted, and when the elapsed time is relatively short, the control means (9) determines that the held heat amount is relatively large.

2. The hot-water supply device according to claim 1, further comprising heat exchanger temperature detecting means for detecting temperature of the heat exchanger, wherein
the control means estimates the held heat amount by detected temperature of the heat exchanger temperature detecting means when the flow rate detecting means detects the predetermined flow rate or more, and when the detected temperature is relatively high, the control means determines that the held heat amount is relatively large.

3. The hot-water supply device according to claim 1, wherein the control means estimates the held heat amount by detected temperature of the hot water supply temperature detecting means when the flow rate detecting means detects the predetermined flow rate or more, and when the detected temperature is relatively high, the control means determines that the held heat amount is relatively large.

## Patentansprüche

1. Warmwasserversorgungsvorrichtung, umfassend:
einen ersten Strömungsweg (1), durch den ein erstes Wärmemedium strömt;
einen zweiten Strömungsweg (2), durch den ein zweites Wärmemedium von einer Wasserversorgungsquelle zu einem Warmwasserversorgungsanschluss strömt;
einen Wärmetauscher (3), in dem Wärme des ersten Wärmemediums, das durch den ersten Strömungsweg (1) strömt, und Wärme des zweiten Wärmemediums, das durch den zweiten Strömungsweg (2) strömt, miteinander ausgetauscht werden;
ein Fluidübertragungsmittel (4), das in dem ersten Strömungsweg (1) vorgesehen ist, um das erste Wärmemedium durch den ersten Strömungsweg (1) strömen zu lassen;
ein Durchflussmengen-Erfassungsmittel (5), das in dem zweiten Strömungsweg (2) vorgesehen ist;
ein Warmwasserversorgungstemperatur-Erfassungsmittel (8), das in dem zweiten Strömungsweg (2) zwischen dem Wärmetauscher (3) und dem Warmwasserversorgungsanschluss vorgesehen ist; und
eine Steuereinrichtung (9), die dafür konfiguriert ist, das Fluidübertragungsmittel (4) zu steuern, um einen Warmwasserversorgungsvorgang so auszuführen, dass die von dem Warmwasserversorgungstemperatur-Erfassungsmittel (8) erfasste Warmwasserversorgungstemperatur gleich einer eingestellten Temperatur wird,
wobei die Vorrichtung so konfiguriert ist, dass
dann, wenn das Durchflussmengen-Erfassungsmittel (5) erfasst, dass eine Durchflussmenge des zweiten Wärmemediums gleich einer vorbestimmten Durchflussmenge oder mehr ist, die Steuereinrichtung (9) das Fluidübertragungsmittel (4) betätigt und den Warmwasserversorgungsvorgang startet, und
die Steuereinrichtung (9) eine gehaltene Wärmemenge des Wärmetauschers (3) schätzt, wenn das Durchflussmengen-Erfassungsmittel (5) erfasst, dass die Durchflussmenge gleich der vorbestimmten Durchflussmenge oder mehr ist, und die Steuereinrichtung das Fluidübertragungsmittel (4) so steuert, dass je relativ größer die gehaltene Wärmemenge ist, eine Übertragungs-Durchflussmenge des ersten Wärmemediums umso kleiner wird, wenn die Warmwasserversorgungstemperatur nahe an die eingestellte Temperatur gebracht wird,
**dadurch gekennzeichnet, dass** die Vorrichtung so konfiguriert ist, dass
dann, wenn das Durchflussmengen-Erfassungsmittel (5) eine Durchflussmenge kleiner als die vorbestimmte Durchflussmenge erfasst, die Steuereinrichtung (9) das Fluidübertragungsmittel (4) stoppt, um den Warmwasserversorgungsvorgang abzuschließen,
die Steuereinrichtung (9) eine Zeitgebereinrichtung (7) enthält, die die Zeit misst, die ab einem Zeitpunkt, an dem ein letzter Warmwasserversorgungsvorgang abgeschlossen ist, bis zu einem Zeitpunkt, an dem ein nächster Warmwasserversorgungsvorgang gestartet wird, verstrichen ist, und
die Steuereinrichtung (9) die gehaltene Wärmemenge mittels der verstrichenen Zeit schätzt, wenn das Durchflussmengen-Erfassungsmittel (5) eine Durchflussmenge erfasst, die nicht geringer als die vorbestimmte Durchflussmenge ist, und der Warmwasserversorgungsvorgang neu gestartet wird, und, wenn die verstrichene Zeit relativ kurz ist, die Steuereinrichtung (9) bestimmt, dass die gehaltene Wärmemenge relativ groß ist.

2. Warmwasserversorgungsvorrichtung nach Anspruch 1, die ferner Wärmetauschertemperatur-Erfassungsmittel zum Erfassen der Temperatur des Wärmetauschers umfasst, wobei
die Steuereinrichtung die gehaltene Wärmemenge mittels der erfassten Temperatur der Wärmetauschertemperatur-Erfassungsmittel schätzt, wenn das Durchflussmengen-Erfassungsmittel die vorbestimmte Durchflussmenge oder mehr erfasst, und, wenn die erfasste Temperatur relativ hoch ist, die Steuereinrichtung bestimmt, dass die gehaltene Wärmemenge relativ groß ist.

3. Warmwasserversorgungsvorrichtung nach Anspruch 1, wobei die Steuereinrichtung die gehaltene Wärmemenge mittels der erfassten Temperatur des Warmwasserversorgungstemperatur-Erfassungsmittels schätzt, wenn das Durchflussmengen-Erfassungsmittel die vorbestimmte Durchflussmenge oder mehr erfasst, und, wenn die erfasste Temperatur relativ hoch ist, die Steuereinrichtung bestimmt, dass die gehaltene Wärmemenge relativ groß ist.

## Revendications

1. Dispositif d'alimentation en eau chaude comprenant :
un premier trajet d'écoulement (1) à travers lequel s'écoule un premier milieu caloporteur ;
un deuxième trajet d'écoulement (2) à travers lequel un deuxième milieu caloporteur s'écoule depuis une source d'alimentation en eau vers un point d'alimentation en eau chaude ;
un échangeur de chaleur (3) dans lequel la chaleur du premier milieu caloporteur s'écoulant à travers le premier trajet d'écoulement (1) et la chaleur du deuxième milieu caloporteur s'écoulant à travers le deuxième trajet d'écoulement (2) sont échangés l'un avec l'autre ;
un moyen de transfert de fluide (4) disposé dans le premier trajet d'écoulement (1) pour faire s'écouler le premier milieu caloporteur à travers le premier trajet d'écoulement (1) ;
un moyen de détection de débit (5) disposé dans le deuxième trajet d'écoulement (2) ;
un moyen de détection de température d'alimentation en eau chaude (8) disposé dans le deuxième trajet d'écoulement (2) entre l'échangeur de chaleur (3) et le point d'alimentation en eau chaude ; et
un moyen de commande (9) qui est conçu pour commander le moyen de transfert de fluide (4) pour effectuer une opération d'alimentation en eau chaude de telle sorte que la température d'alimentation en eau chaude détectée par le moyen de détection de température d'alimentation en eau chaude (8) devient égale à une température de consigne,
le dispositif étant conçu de telle sorte que
lorsque le moyen de détection de débit (5) détecte qu'un débit du deuxième milieu caloporteur est égal à un débit prédéterminé ou dépasse celui-ci, le moyen de commande (9) actionne le moyen de transfert de fluide (4) et démarre l'opération d'alimentation en eau chaude et
le moyen de commande (9) estime une quantité de chaleur conservée de l'échangeur de chaleur (3) lorsque le moyen de détection de débit (5) détecte que le débit est égal au débit prédéterminé ou dépasse celui-ci et le moyen de commande commande le moyen de transfert de fluide (4) de telle sorte que plus la quantité de chaleur conservée est relativement plus grande, plus un débit de transfert du premier milieu caloporteur devient petit lorsque la température d'alimentation en eau chaude s'approche de la température consigne,
**caractérisé en ce que** le dispositif est conçu de telle sorte que
lorsque le moyen de détection de débit (5) détecte un débit inférieur au débit prédéterminé, le moyen de commande (9) arrête le moyen de transfert de fluide (4) pour achever l'opération d'alimentation en eau chaude,
le moyen de commande (9) inclut un moyen de minuterie (7) qui mesure le temps écoulé depuis un instant où une dernière opération d'alimentation en eau chaude est achevée jusqu'à un instant où une opération d'alimentation en eau chaude suivante est démarrée et
le moyen de commande (9) estime la quantité de chaleur conservée par le temps écoulé lorsque le moyen de détection de débit (5) détecte un débit non inférieur au débit prédéterminé et l'opération d'alimentation en eau chaude est redémarrée et, lorsque le temps écoulé est relativement court, le moyen de commande (9) détermine que la quantité de chaleur conservée est relativement grande.

2. Dispositif d'alimentation en eau chaude selon la revendication 1, comprenant en outre un moyen de détection de température d'échangeur de chaleur pour détecter la température de l'échangeur de chaleur,
le moyen de commande estimant la quantité de chaleur conservée par la température détectée du moyen de détection de température d'échangeur de chaleur lorsque le moyen de détection de débit détecte le débit prédéterminé ou plus et, lorsque la température détectée est relativement élevée, le moyen de commande déterminant que la quantité de chaleur conservée est relativement grande.

3. Dispositif d'alimentation en eau chaude selon la revendication 1, dans lequel le moyen de commande estime la quantité de chaleur conservée par la température détectée du moyen de détection de température d'alimentation en eau chaude lorsque le moyen de détection de débit détecte le débit prédéterminé ou plus et, lorsque la température détectée est relativement élevée, le moyen de commande détermine que la quantité de chaleur conservée est relativement grande.
